# DEMANDE DE BREVET EUROPEEN

(11) **EP 1 376 501 A1**
(43) Date de publication de la demande: **02.01.2004**
(21) Numéro de dépôt: 02447120.3
(22) Date de dépôt: 18.06.2002
(51) Int. Cl.: G07G 1/00, G07F 17/32, G07F 17/34

(54) **Caisse enregistreuse**

(71) Demandeur: Piccoli, Graziano, 9870 Zulte (BE)
(72) Inventeur: Piccoli, Graziano, 9870 Zulte (BE)
(74) Mandataire: Quintelier, Claude

(57) **Abrégé**

L'invention concerne une caisse enregistreuse pourvue d'un calculateur relié à une unité d'entrée agencée pour produire au moins un signal d'entrée sur base des données introduites par l'intermédiaire de l'unité d'entrée, le calculateur étant agencé pour recevoir ledit signal d'entrée et pour traiter ce dernier de manière à générer un signal de résultat. Ladite caisse enregistreuse comprend également un générateur relié à une entrée de commande agencée pour produire un signal de commande, ledit générateur étant agencé pour sélectionner, parmi un nombre prédéterminé de données d'ajustement et sous contrôle dudit signal de commande, une donnée d'ajustement et pour produire, sur base de ladite donnée d'ajustement sélectionnée, un signal d'ajustement, ledit générateur étant agencé pour transmettre ledit signal d'ajustement audit calculateur, celui-ci étant agencé pour recevoir ledit signal d'ajustement et pour générer, sur base dudit signal d'ajustement et dudit signal d'entrée ledit signal résultat.

## Description

L'invention est relative à une caisse enregistreuse pourvue d'un calculateur relié à une unité d'entrée agencée pour produire au moins un signal d'entrée sur base des données introduites par l'intermédiaire de l'unité d'entrée, le calculateur étant agencé pour recevoir ledit signal d'entrée et pour traiter ce dernier de manière à générer un signal de résultat.

Les caisses enregistreuses sont particulièrement utilisées chez les commerçants au détail tels que boulangers, charcutiers, fromagers ou encore dans les champs de foire, chez les glaciers, vendeurs de frittes, etc. La caisse enregistreuse permet à chaque encaissement de noter sur papier ou fichier électronique les transactions effectuées, ce qui permet ensuite au commerçant de tenir sa comptabilité à jour.

Néanmoins, les commerçants ou les vendeurs sont souvent débordés par la clientèle devant être servie. Le stress aidant, le commerçant ou le vendeur a tendance à oublier fréquemment d'encoder les montants perçus dans la caisse enregistreuse ce qui provoque par après une grande difficulté pour tenir à jour la comptabilité puisque la plupart des transactions n'ont pas été encodées dans la caisse enregistreuse.

D'autre part, certains employés malintentionnés peuvent profiter du non encodage des montants pour prendre une partie des recettes à leur nom, de manière à léser leur employeur.

Le but de la présente invention est donc d'apporter une solution à ce problème d'oubli d'encodage, volontaire ou involontaire, dans la caisse enregistreuse et donc de permettre une comptabilité correcte.

Pour résoudre ce problème, il est donc prévu suivant l'invention, une caisse enregistreuse comprenant un générateur relié à une entrée de commande agencée pour produire un signal de commande, ledit générateur étant agencé pour sélectionner, parmi un nombre prédéterminé de données d'ajustement et sous contrôle dudit signal de commande, une donnée d'ajustement et pour produire, sur base de ladite donnée d'ajustement sélectionnée, un signal d'ajustement, ledit générateur étant agencé pour transmettre ledit signal d'ajustement audit calculateur, celui-ci étant agencé pour recevoir ledit signal d'ajustement et pour générer, sur base dudit signal d'ajustement et dudit signal d'entrée ledit signal résultat.

De cette manière, une fois les données introduites dans l'unité d'entrée, celle-ci produit sur base de ces données introduites, au moins un signal d'entrée, celui-ci correspondant aux montants des achats effectués par un client. Le calculateur est agencé pour recevoir ledit signal d'entrée et pour traiter ce dernier de façon à générer un signal de résultats, par exemple une somme à payer. De plus, la caisse enregistreuse de la présente invention comprend un générateur agencé pour sélectionner, parmi un nombre prédéterminé de données d'ajustement et sous contrôle de signal de commande, une donnée d'ajustement. Cette donnée d'ajustement permet d'influencer le calcul effectué par le calculateur et donc le signal de résultats de préférence en faveur du client. Ainsi, le client, motivé par une réduction substantielle du prix d'achat ou par les avantages offerts, exigera en général l'introduction correctes des achats dans la caisse enregistreuse. Une comptabilité correcte pourra ainsi être obtenue car les achats et le prix auquel ils ont été vendue seront correctement enregistré dans la caisse enregistreuse. La caisse enregistreuse suivant l'invention permet donc un contrôle efficace des achats fait par le consommateur puisque d'une part le vendeur doit encoder la transaction dans l'unité d'entrée pour permettre au client d'utiliser l'entrée de commande et donc recevoir un avantage sélectionné par le générateur, et d'autre part si le client est lésé par l'oublie d'encodage du vendeur, il pourra réclamer l'utilisation de l'entrée de commande, sans quoi le signal de résultat ne sera pas produit.

Suivant une deuxième forme de réalisation, le générateur comprend une mémoire agencée pour stocker un nombre prédéterminé d'ensembles comprenant chacun un nombre prédéterminé de données d'ajustement, le générateur étant aussi agencé pour sélectionner, sur base du signal d'entrée, un des ensembles parmi le nombre prédéterminé d'ensembles et pour sélectionner parmi cet ensemble sélectionné la donnée d'ajustement.

Cette deuxième forme de réalisation permet par exemple de privilégier les clients ayant acheté pour une somme d'argent relativement importante. Ainsi le générateur influencé par les données introduites, par exemple les montants des achats, pourra choisir un ensemble ayant des données d'ajustement plus avantageuses pour le client.

Suivant une troisième forme de réalisation, le générateur de la caisse enregistreuse est agencé pour sélectionner une des données d'ajustement de manière aléatoire. De cette manière, la donnée d'ajustement sélectionnée pourra changer, le cas échéant, à chaque achat donnant au consommateur un aspect de jeu.

D'autres formes de réalisation de caisse enregistreuse suivant l'invention sont indiquées dans les revendications annexées.

De plus, d'autres détails et particularités de l'invention ressortiront de la description donnée ci-après, à titre non limitatif et avec référence aux dessins annexés.

La figure 1 illustre schématiquement une première forme de réalisation préférentielle de l'invention.

La figure 2 illustre schématiquement une deuxième forme de réalisation préférentielle de l'invention pourvue d'une roue.

Dans les dessins une même référence a été attribué à un même élément ou à un élément analogue.

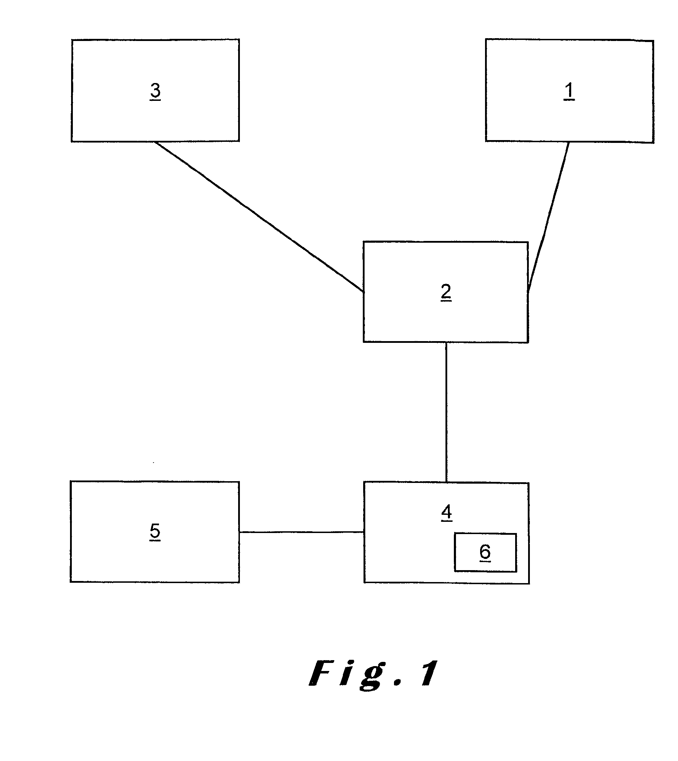

Suivant la figure 1, la caisse enregistreuse est pourvue d'une unité d'entrée 1 reliée à un calculateur 2, cette unité d'entrée pouvant être un clavier de type machine à calculer. Cette unité d'entrée peut donc avoir un nombre prédéterminé de touches, certaines touches correspondant à des chiffres, d'autres à des opérations arithmétiques ou encore à des touches commandant l'ouverture de la caisse, l'annulation de l'opération précédente, la sortie du ticket, etc.

Suivant une autre forme de réalisation de l'unité d'entrée, celle-ci peut être un écran tactile où chaque touche correspondrait à une marchandise particulière, par exemple pour un glacier la touche peuvent correspondre à un cornet à trois boules de glace serait représentée par un cornet à trois boules. De même, l'unité d'entrée pourrait être aussi un lecteur de code à barres, ce qui permettrait de ne plus devoir encoder manuellement l'ensemble des montants de l'article.

Le calculateur est relié d'une part à une unité d'affichage 3 et d'autre part à un générateur 4. Ce dernier est connecté à une entrée de commande 5 et peut être pourvu d'une mémoire 6.

Lorsque le client passe sa commande auprès du vendeur, ce dernier introduit alors les données d'achats objet de la transaction par l'intermédiaire de l'unité d'entrée 1. Celle-ci génère alors sur base des données introduites un signal d'entrée qui est transmis vers le calculateur 2. Le calculateur peut alors par exemple passer en mode d'attente et générer un signal d'activation destiné à être transmis à l'entrée de commande 5 de manière à l'activer. L'entrée de commande peut être par exemple un bouton poussoir situé près de l'endroit où le client se trouve. Lorsque le client appuie sur le bouton poussoir, celui-ci génère un signal de commande et le transmet au générateur. Dans cet exemple, le générateur est pourvu d'une mémoire 6 dans laquelle est stockée une série de données d'ajustement. Le générateur peut alors sélectionner dans la mémoire , l'une des données d'ajustement qui y est stocké et produire à partir de cette donnée sélectionnée un signal d'ajustement destiné à être transmis au calculateur. Ce dernier pourra alors, sur base du signal d'entrée reçu précédemment et du signal d'ajustement, générer un signal de résultat et par exemple le transmettre à l'unité d'affichage. Il faut noter que le calculateur ne peut déterminer le signal de résultats qu'après avoir reçu le signal d'ajustement.

Supposons qu'un client après avoir acheté pour un article, appuie ensuite sur le bouton de l'entrée de commande 5. Ce dernier envoie alors le signal de commande au générateur. Le générateur sélectionnera alors l'une des données d'ajustements. Les données d'ajustement peuvent être par exemple des coefficients de réduction, des indications quant à des bons de réduction à valoir directement ou sur le prochain achat, des indications quant à des cadeaux bonus tel que un jeu pour enfants, une indications quant à un petit article ajouté gratuitement, etc. Le signal de résultat pourrait donc découler de la multiplication des données introduites dans l'unité d'entrée et d'un coefficient de réduction. Ainsi, une fois que le vendeur ait introduit dans l'unité d'entrée un montant de, par exemple, 50 EUROS, et que le générateur ait sélectionné un coefficient d'ajustement de, par exemple, 0.95, le calculateur pourra simplement multiplier le nombre du montant, avec le coefficient de réduction de manière à obtenir le nombre figurant dans le résultat, ici 47.5. Ensuite, le calculateur pourra générer le signal de résultats découlant de cette transaction pour ensuite afficher sur un écran par exemple, le message suivant: « votre achat est de 50 EUROS votre réduction de 5% vous devez payer 47.5 EUROS ».

Selon une autre alternative, La donnée d'ajustement est une indication d'un bons de réduction. Dans ce dernier cas, le générateur pourrait sélectionner une donnée d'ajustement indiquant par exemple « un bon de réduction d'un montant de 10% sur le prochain achat ». Sur base de cette donnée d'ajustement, le générateur génère et transmet le signal d'ajustement correspondant, au calculateur. Ce dernier compile alors ensemble le signal d'entrée et le signal d'ajustement de manière à obtenir le signal de résultat. Une fois, le signal de résultat transmis à l'unité d'affichage, celle-ci peut indiquer alors, sur un écran d'affichage, le montant à payer ainsi que l'indication du bon de réduction de 10% a donné au client. Dans ce cas-ci, la caisse enregistreuse, suivant l'invention, peut être pourvue d'une imprimante agencée pour recevoir le signal d'ajustement ou le signal de résultat et pour imprimer le bon de réduction indiqué par la donnée d'ajustement.

L'entrée de commande ne s'activant par exemple qu'après que le signal de données ne soit transmis au calculateur, le client exigera que ces données d'achats soient introduites dans la caisse enregistreuse pour que celui-ci puisse activer l'entrée de commande de manière à obtenir une donnée d'ajustement modifiant le prix de son achat. Ainsi, ce n'est seulement que lorsque les données d'entrée seront correctement introduites dans la caisse enregistreuse que le générateur pourra générer le signal d'ajustement. De cette manière, les données des transactions seront donc introduites de manière plus régulière et la comptabilité sera plus correcte.

Suivant une autre forme de réalisation, le client lui-même peut introduire sa commande dans l'unité d'entrée. Le bouton de validation de la commande pouvant être le bouton de l'entrée de commande qui produirait donc le signal de commande. Le générateur sélectionnerait alors à son tour une donnée d'ajustement et produira le signal d'ajustement. Dans cette forme de réalisation, le client est entièrement autonome ce qui pourrait faire gagner beaucoup de temps lors de la vente puisque le vendeur n'aurait plus qu'a préparé la commande et vérifie que le client introduit les données d'achats correspondant effectivement aux achats effectué.

De même, l'invention peut se présenter sous la forme d'un distributeur automatique comprenant une unité d'entrée reliée, comme à la figure 1, à un calculateur. Ce dernier étant aussi relié à un générateur, lui-même relié à l'entrée de commande. De plus, cette forme de réalisation particulière comprend une réserve de produits de consommation pourvue d'un mécanisme de distribution relié l'unité d'entrée. Le calculateur est agencé pour recevoir un signal d'entrée généré par l'unité d'entrée sur base des données introduites dans cette unité d'entrée, Cette dernière étant agencé pour contrôler le mécanisme de distribution sur base des données qui y sont introduites. De même que dans les formes de réalisation précédentes, le générateur est agencé pour sélectionner une donnée d'ajustement, sur base du signal de commande, généré par l'entrée de commande. Le générateur est aussi agencé pour générer un signal d'ajustement et le transmettre au calculateur de manière à ce que ce dernier génère sur base du signal d'entrée et du signal d'ajustement, un signal de résultat.

Ainsi, lorsque un utilisateur désire l'un des produits de consommation de la réserve, il introduit sa commande par l'intermédiaire de l'unité d'entrée laquelle génère le signal d'entrée. Cette introduction active l'entrée de commande qui, une fois les données introduites, envoie le signal de commande au générateur lequel produit à son tour le signal d'ajustement. Ce signal d'ajustement est alors transmis au calculateur qui génère sur base de ce dernier signal et du signal d'entrée, le signal de résultats. Ce dernier est alors transmis à une interface qui informe l'utilisateur, par exemple, du montant de la transaction. Une fois la transaction effectuée, l'unité d'entrée contrôle alors, sur base des données introduites, le mécanisme de distribution qui, par exemple, dépose les produits de la transaction dans un réceptacle accessible à l'utilisateur.

Selon une autre forme de réalisation suivant l'invention, le générateur peut comprendre une mémoire agencée pour stocker un nombre prédéterminé d'ensembles comprenant chacun un nombre prédéterminé de données d'ajustement. Le générateur peut alors être agencé pour recevoir le signal d'entrée. De cette manière, le générateur peut sélectionner en fonction du signal d'entrée, l'ensemble dans lequel le générateur sélectionnera l'une des données d'ajustement.

Ainsi, l'ensemble sélectionné changera en fonction par exemple du montant des achats, des articles achetés, du nombre d'articles achetés en promotion, etc.

La mémoire du générateur peut avoir par exemple trois ensembles, un premier réservé aux achats entre 10 et 30 EURO, une deuxième entre 30 et 50 EUROS, et une troisième réservée aux achats de plus 50 EUROS. Lorsque le client a acheté pour 35 EUROS, le générateur sélectionnera le deuxième ensemble, celui-ci ayant par exemple des données d'ajustement plus intéressantes pour le client que le premier ensemble et moins intéressantes que le troisième.

De plus, le générateur peut par exemple déterminer suivant un algorithme de calcul que pour le centième signal de commande reçu, le générateur sélectionnera une donnée d'ajustement rendant le montant des achats gratuit pour le client. A cette fin, le générateur possède un compteur enregistrant chaque signal de commande.

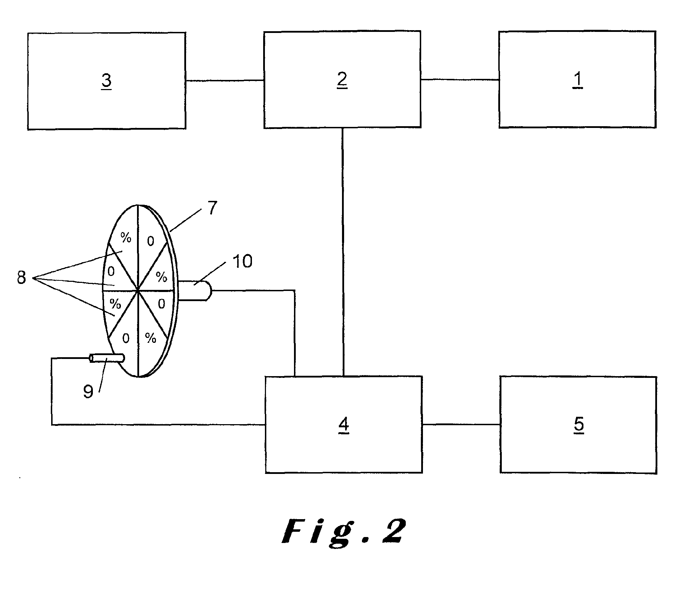

Selon une autre forme de réalisation de l'invention illustrée à la figure 2, le générateur peut sélectionner de manière aléatoire la donnée d'ajustement. Ainsi, les modifications apportées au montant sera généralement différente d'une fois à l'autre.

Selon une forme de réalisation préférentielle, le générateur comprend une roue 7 ayant sur l'une de ses faces les données d'ajustement 8, le générateur ayant de plus un détecteur (9) agencé pour détecter la donnée d'ajustement.

Ainsi, une fois les données introduites par l'intermédiaire de l'unité d'entrée et le signal de commande reçu par le générateur, ce dernier peut par exemple actionner un moteur 10 qui fait tourner la roue pendant un laps de temps prédéterminé. Une fois la roue arrêtée, un détecteur détermine la donnée d'ajustement qui se trouve face à un repère sur la roue. Cette roue permet de sélectionner de manière aléatoire les données d'ajustement.

Pour augmenter la participation du client on peut lui demander de faire lui-même tourner la roue, celle-ci étant dans ce cas-ci dépourvue de moteur.

## Revendications

1. Caisse enregistreuse pourvue d'un calculateur relié à une unité d'entrée agencée pour produire au moins un signal d'entrée sur base des données introduites par l'intermédiaire de l'unité d'entrée, le calculateur étant agencé pour recevoir ledit signal d'entrée et pour traiter ce dernier de manière à générer un signal de résultat, **caractérisée en ce que** la caisse enregistreuse comprend un générateur relié à une entrée de commande agencée pour produire un signal de commande, ledit générateur étant agencé pour sélectionner, parmi un nombre prédéterminé de données d'ajustement et sous contrôle dudit signal de commande, une donnée d'ajustement et pour produire, sur base de ladite donnée d'ajustement sélectionnée, un signal d'ajustement, ledit générateur étant agencé pour transmettre ledit signal d'ajustement audit calculateur, celui-ci étant agencé pour recevoir ledit signal d'ajustement et pour générer, sur base dudit signal d'ajustement et dudit signal d'entrée ledit signal résultat.

2. Caisse enregistreuse suivant la revendication 1, **caractérisée en ce que** ledit générateur est agencé pour sélectionner une des données d'ajustement de manière aléatoire.

3. Caisse enregistreuse suivant l'une des revendications 1 à 2, **caractérisée en ce que** ledit générateur comprend une mémoire agencée pour stocker un nombre prédéterminé d'ensembles comprenant chacun un nombre prédéterminé de données d'ajustement, ledit générateur étant agencé pour sélectionner sur base dudit signal d'entrée un des ensembles parmi le nombre prédéterminé d'ensembles, et pour sélectionner parmi ledit ensemble sélectionné ladite donnée d'ajustement.

4. Caisse enregistreuse suivant l'une des revendications 1 à 2, **caractérisée en ce que** le générateur comprend au moins une roue ayant sur l'une des faces lesdites données d'ajustement, le générateur ayant un détecteur agencé pour détecter ladite donnée d'ajustement.

5. Caisse enregistreuse suivant l'une des revendications 1 à 4, **caractérisée en ce que** l'unité d'affichage est agencée pour recevoir ledit signal de résultat pour l'afficher.

6. Distributeur automatique comprenant une unité d'entrée agencée pour produire au moins un signal d'entrée sur base des données introduites par l'intermédiaire de l'unité d'entrée , ladite unité d'entrée étant relié à un calculateur agencé pour recevoir ledit signal d'entrée et pour traiter ce dernier de manière à générer un signal de résultat, ladite unité d'entrée est aussi reliée à un mécanisme de distribution d'une réserve de produits de consommation, ladite unité d 'entrée étant agencée pour contrôler sur base du signal d'entrée ledit mécanisme de distribution, **caractérisé en ce que** le distributeur automatique comprend un générateur relié à une entrée de commande agencée pour produire un signal de commande, ledit générateur étant agencé pour sélectionner, parmi un nombre prédéterminé de données d'ajustement et sous contrôle dudit signal de commande, une donnée d'ajustement et pour produire, sur base de ladite donnée d'ajustement sélectionnée, un signal d'ajustement, ledit générateur étant agencé pour transmettre ledit signal d'ajustement audit calculateur, celui-ci étant agencé pour recevoir ledit signal d'ajustement et pour générer, sur base dudit signal d'ajustement et dudit signal d'entrée ledit signal résultat.

7. Distributeur automatique suivant la revendication 6, **caractérisé en ce que** ledit générateur est agencé pour sélectionner une des données d'ajustement de manière aléatoire
